# EUROPEAN PATENT APPLICATION

(11) **EP 1 020 328 A2**
(43) Date of publication of application: **19.07.2000**
(21) Application number: 00650001.1
(22) Date of filing: 10.01.2000
(51) Int. Cl.: B60R 1/06

(54) **Vehicular mirror actuator**

(30) Priority: 11.01.1999 US 228348; 11.01.1999 US 228579
(71) Applicant: DONNELLY CORPORATION, Holland Michigan 49423 (US)
(72) Inventor: Schnell, Robert E., Holland, Michigan 49424 (US); Willmore, David K., Holland, Michigan 49424 (US)
(74) Representative: Brophy, David

(57) **Abstract**

A mirror actuator is provided for a rearview mirror system having a reflective element. The mirror actuator includes a housing and at least one positioning member extending from the housing to move the reflective element about at least one degree of freedom. At least one and, typically, two motors are provided for driving the positional member. A linear position transducer may be provided having a body for coupling to the reflective element and a circuit board positioned in the housing. The body of the linear position transducer is guided at the circuit board in at least one direction and moves along the circuit board between a plurality of positions in response to movement of the reflective element about the at least one degree of freedom. The circuit board is configured to generate a signal as a function of the position of the body of the linear position transducer along the circuit board. A wiring harness may be provided having a connector and a plurality of wires terminated at the connector. The connector includes at least three electrical connector terminals electrically interconnected with the wires. When the connector joins with the actuator case, the connector terminals may make direct contact with corresponding receiving terminals of the electric motors. The connector preferably includes a body that is made up of two body portions that are integrally molded defining a living hinge and then folded into facing relationship thereby capturing a portion of each terminal. Complimentary retention members on the connector and actuator case may be provided to retain the connector with the actuator case external of the case. The connector preferably has a cross-section width sufficiently small to pass through the internal passage of a pivot post.

## Description

This invention relates generally to vehicle rearview mirror systems and, more particularly, to mirror actuators for adjustably positioning a reflective element. The invention is particularly useful with mirror systems in which at least one mirror position is stored in a memory device and may be recalled and the mirror driven to the stored position. The invention is particularly directed to a position transducer which monitors the position of the mirror as part of the vehicle memory mirror function. The invention is also particularly directed to an electrical connector arrangement for delivering electrical current to mirror positioning actuator motors in such exterior mirror assembly.

A vehicle memory system includes an actuator that is capable of independently adjusting a reflective element in two different degrees of freedom. A controller includes a memory device for storing at least one mirror position which may be retrieved and the mirror driven to that position with respect to each of the degrees of freedom. In order to do so, it is necessary to provide positional feedback to the controller in order for the controller to know the position of the mirror with respect to each degree of freedom. Accordingly, the actuator also includes a pair of position transducers to monitor the position of the mirror with respect to such degrees of freedom. The position transducers may be linear position transducers which are movable with respect to an outer portion of the mirror opposite the motor driving the mirror with respect to that degree of freedom. Thus, although the mirror is moved in an arcuate motion, the position of the mirror is monitored as a linear movement of the linear position transducer.

One technique that has been proposed is to utilize a Hall-effect sensor. While such Hall-effect sensors operate reasonably well, they are relatively expensive for automotive applications and, therefore, add significant cost to a memory feature of the mirror system. Another approach is to provide a pair of spaced apart parallel conductive tracks typically arranged as a voltage divider and a brush mechanism spanning the traces. By suitable connection of such circuit to a controller, the position of the brush along the traces may be monitored as a signal produced by the traces, which varies as a function of the brush on the traces. Therefore, by providing a suitable coupler between the brush and the reflective element, the position of the reflective element with respect to a degree of freedom can be monitored by the signal supplied to the controller.

In one such linear position transducer, the coupler is an elongated rod which rides in a cylindrical cavity. A first end of the rod is joined for movement with the reflective element and the opposite end is enlarged and provided with an arcuate outer surface which is rotatably slidably guided by the walls of the cavity. A mounting member for the brush projects through an opening in the cavity wall and thereby moves the brush along an adjacent circuit board. In addition to being relatively expensive to produce, the relatively large separation distance between the brush and the rod causes the relative spacing between the brush and the circuit board to be varied as the elongated member rotates within the cavity. This makes spacing between the cavity and circuit board critical and requires the brush to be capable of accommodating substantial movement between its support and the circuit board while maintaining acceptable contact pressure with the resistive traces.

The actuator assembly typically includes two motors, each for rotating the mirror with respect to one of two generally orthogonal axes. Various techniques have been proposed for supplying electrical current to the two motors in order to independently actuate the motors in either a forward or reverse rotational direction. It is common to provide a hollow pivot post that pivotally mounts the mirror assembly to the vehicle, in order to provide a breakaway feature whereby the mirrors may be knocked out of position without damaging the mirror mounting or which may be folded by yet another motor into a foldaway position. It is known to have a wiring harness pass through the central opening of the pivot post and be terminated at one or more electrical connectors for connecting with the actuator assembly. A difficulty with the prior art is that the connector bodies used to electrically interface the wiring harness with the actuator case terminals have been too large to pass through the opening in the pivot post pivotally mounting the mirror assembly. Therefore, it has been necessary to leave the other end of the wire harness not terminated to thereby pass through the opening in the pivot post. This requires a subsequent step of terminating the other end of the wiring harness which is a labor intensive operation that must take place after the mirror has been assembled. On mirror assemblies that are not foldable, it is still necessary to pass the wires through an opening passing to the vehicle.

In a proposed actuator, the connectors are made up of electrical terminals staked onto the wires and then slidably received within complimentary slots in the connector body. Such arrangement has not been entirely satisfactory. The connector body must be made relatively large in order to provide sufficient rigidity to the terminals held in this manner. Furthermore, the assembly of the terminal to the connector body is relatively labor intensive and conducive to automated assembly. Furthermore, the retention of the terminals in the connector body is of questionable strength.

In order to retain the connector to the case of the actuator, resilient clips are provided on the connector body which engage openings in the actuator case. Thus, a force pushing the connector body towards the actuator case will cause the terminals of the connector to engage terminals of the case and will ultimately cause an engagement of the spring resilient clips with the openings in the actuator case. While such arrangement is intended to hold the connector in place against the actuator case, the connector can be readily dislocated by a pulling on the wire harness. Therefore, an extra stay is provided to hold the wiring harness against the actuator case to reduce the likelihood that the wires will be pulled sufficiently to dislocate the connector bodies from the case.

Another difficulty with such arrangement is that it necessitates the placement of openings in the actuator case. Because the actuator is exposed to environmental conditions, namely moisture, road splash, and the like, the existence of openings in the case provides a quality difficulty with the known connector engagement mechanism. In order to overcome the difficulty, the prior art has proposed configuring the connector to provide a sealing interface between the connector body and the case. While such arrangement may reduce the amount of moisture entering the case, it cannot entirely preclude such penetration.

Another difficulty with prior actuator assemblies is the necessity to provide electrical conductors from terminals on the actuator case to the electrical motors therein. It is common to use metal banding to attach the internal conductors to the external terminals which technique is prone to a high incident of poor conductivity and even mechanical failure. Several proposals have been made to replace the banding procedures of the prior art. One proposal is disclosed in commonly assigned United States Patent No. 5,900,999 for a HOUSING WITH INTEGRAL CONNECTOR FOR REARVIEW MIRROR ACTUATOR ASSEMBLY, the disclosure of which is incorporated herein by reference. However, even the proposals provided therein require a separate step of applying conductors to the actuator case.

### SUMMARY OF THE INVENTION

The present invention provides a vehicular exterior mirror assembly which eliminates the drawbacks of the prior art. According to an aspect, the present invention provides a linear transducer for monitoring a position of a reflective element in a vehicular rearview mirror system memory actuator that is of a low cost and easy to assemble and that provides accurate and repeatable indication of the position of the reflective element.

A vehicular mirror system memory actuator for a rearview mirror system having a reflective element and controller includes a case, at least one positioning member extending from the case to move the reflective element about at least one degree of freedom and at least one motor driving the positioning member. The memory actuator further includes a linear transducer having a body for coupling to the reflective element and a circuit board positioned in the case. The body of the linear transducer is guided at the circuit board in at least one direction and moves along the circuit board between a plurality of positions in response to the moving of the reflective element about the at least one degree of freedom. The circuit board is configured to generate a signal to the controller as a function of the position of the body of the linear actuator along the circuit board.

Because the linear transducer body is guided by the circuit board in at least one direction, the necessity for separate mechanisms to guide linear movement of the transducer body are significantly reduced. Furthermore, the sensing mechanism, which may be, for example, a pair of resistive strips on the circuit board and a pair of contact portions on the linear transducer for contacting the reflective strips, can be consistently maintained in contact because the linear transducer body may be guided by the circuit board in the direction of contact between the contact portions and the resistive strips.

Preferably, the linear transducer body includes a pair of arms which engage the circuit board and, most preferably, straddles the circuit board. In this manner, projecting members from one or both of the arms may engage the circuit board and thereby allow the body to pivot on the circuit board about the projecting members. The contact portions may be supported on one of the pair of arms and an opening formed in the other of the pair of arms opposite to the contact portions. This facilitates the assembly of the pair of contact portions to the first arm by allowing the assembly to take place through the opening. Thus, the linear transducer body may be readily assembled using automated assembly techniques, such as insert molding, heat staking, interference fit, or the like. Furthermore, the assembly may be completed by inserting the circuit board in appropriate locations within the actuator case and straddling the linear transducer arms over the circuit board. It is further possible to apply linear actuators used to sense the position of the reflective element about two separate degrees of freedom on a common circuit board which thereby facilitates the overall assembly of the rearview mirror system memory actuator.

According to another aspect, the present invention provides a mirror assembly including an actuator having a case and at least two electric motors supported by the case and connected with a reflective element to provide adjustment to the reflective element with respect to at least two axes. A wiring harness is provided having a connector and a plurality of wires terminated at the connector. The connector includes at least three electrical connector terminals electrically interconnected with the wires. When the connectors join with the actuator case, the connector terminals make direct contact with corresponding receiving terminals of the electrical motors. In this manner, the necessity for electrical connectors within the actuator casing is substantially eliminated and both motors are supplied from one connector. Importantly, this eliminates the necessity for the banding of conductors to the motor terminals and the attendant labor expenses and failure mode associated therewith. It also avoids potential misconnection resulting from use of more than one connector to feed the motors.

According to another aspect of the invention, a vehicular exterior mirror assembly includes an actuator having a case and at least two electric motors supported by the case and connected with a reflective element to provide adjustment to the reflective element with respect to two axes. A wiring harness is provided having a connector and a plurality of wires terminated at the connector. The connector includes a plurality of electrical connector terminals electrically interconnected with the wires and adapted to be joined with the actuator case. The connector includes a body defined by two facing portions that capture portions of the connector terminals between the two facing portions. This configuration provides exceptionally secure mechanical support for the terminals by the connector body. This is accomplished in a manner which is easy to assemble and is adapted to automatic assembling techniques. In particular, the connector terminals may be supported by application from above one of the facing portions with the other facing portion then being placed above the connector terminals thereby holding the terminals in place. Preferably, the two portions are integrally molded and define a living hinge. The portions may be joined in facing relationship by known techniques, such as cold staking, heat staking, snap welding, sonic welding and adhesive bonding.

According to another aspect of the invention, a vehicular exterior mirror assembly includes an actuator having a case and at least two electric motors supported by the case and connected with a reflective element to provide adjustment to the reflective element with respect to the two axes. A wiring harness is provided having a connector and a plurality of wires terminated at the connector. The connector includes a plurality of electrical connector terminals eleotrically interconnected with the wires and adapted to be joined with the actuator case. Complimentary retention members on the connector and the actuator case engage to retain the connector with the actuator case. The retention members are positively engaged, thus requiring motion other than a separating motion between the connector and the actuator case to disengage the retention members. This provides an exceptionally strong mechanical bond between the connector and the actuator case. Preferably, the retention member includes a pair of ears on one of the connector and the actuator case which engage features protruding from the other of the connector and the actuator case.

Accordingly to yet another aspect of the invention, a vehicular exterior mirror assembly includes an actuator having a case and at least two electrical motors supported by the case and connected with a reflective element to provide adjustment to the reflective element with respect to at least two axes. The assembly further includes a wiring harness having a connector and a plurality of wires terminated at the connector. The connector includes a plurality of electrical connector terminals electrically interconnected with the wires and adapted to be joined with the actuator case. The mirror assembly housing defines an internal passage therethrough. The electrical connector has a cross-section width dimension that is less than the cross section of the internal passage of the mirror assembly housing. This allows the connector to be passed through the opening during assembly of the mirror assembly. In this manner, both ends of the wiring harness can be terminated in electrical connectors prior to assembly to the mirror assembly and the connector which joins with the actuator case can be passed through the opening in order to interconnect the actuator with the vehicle electrical system. This is exceptionally efficient in assembly of the mirror assembly. By allowing both ends of the wiring harness to be terminated in connectors ahead of time, the wiring harness is adapted to be manufactured using automated techniques.

These and other objects, advantages and features of this invention will become apparent upon review of the following specification in conjunction with the drawings.

### BRIEF DESCRIPTION OF THE DRAWINGS

Fig. 1 is a rear elevation of an exterior rearview mirror system according to the invention with a portion of the reflective element removed to reveal internal components thereof;
Fig. 2 is an exploded perspective view of a rearview mirror memory actuator according to the invention;

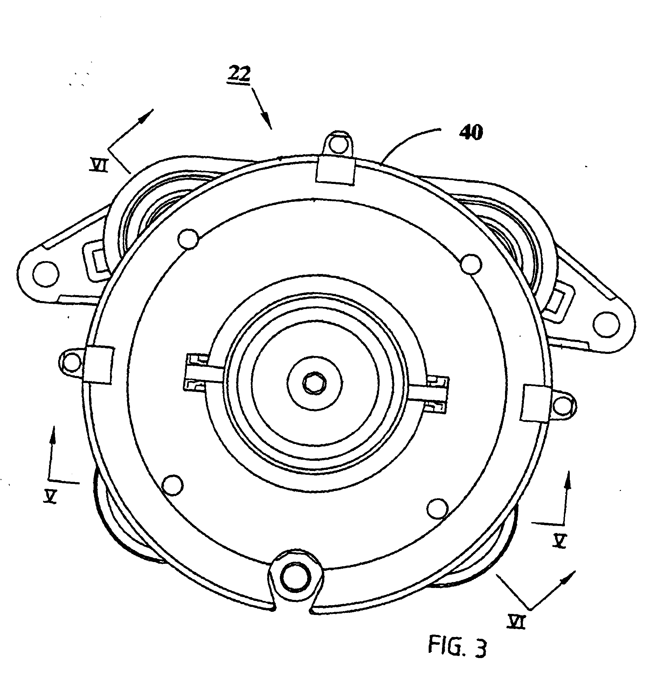

Fig. 3 is a rear elevation of the memory actuator in Fig. 1;
Fig. 4 is the same view as Fig. 3 with the upper portion of the memory actuator, and components mounted to the upper portion of the housing removed in order to reveal internal features thereof;

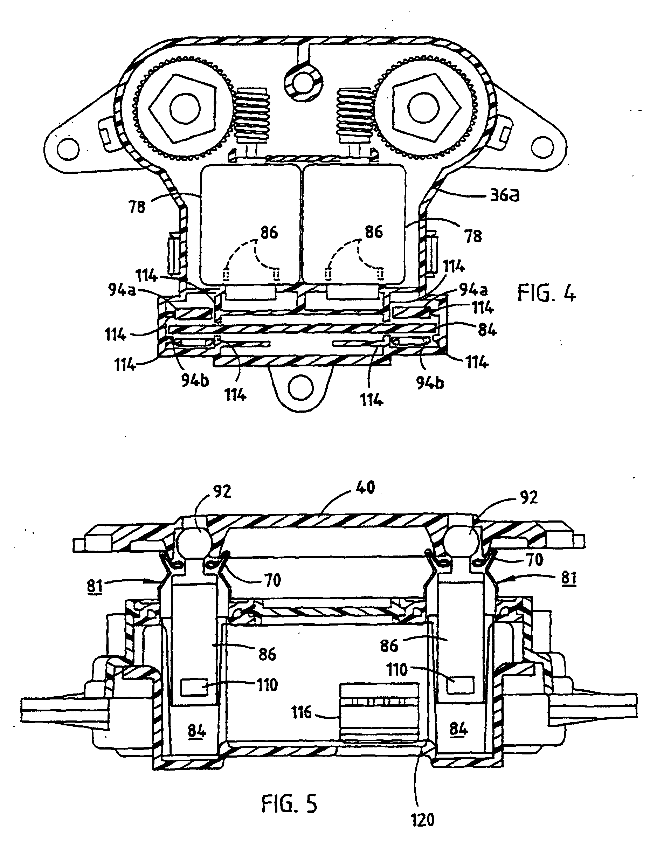

Fig. 5 is a sectional view taken along the lines V-V in Fig. 3;

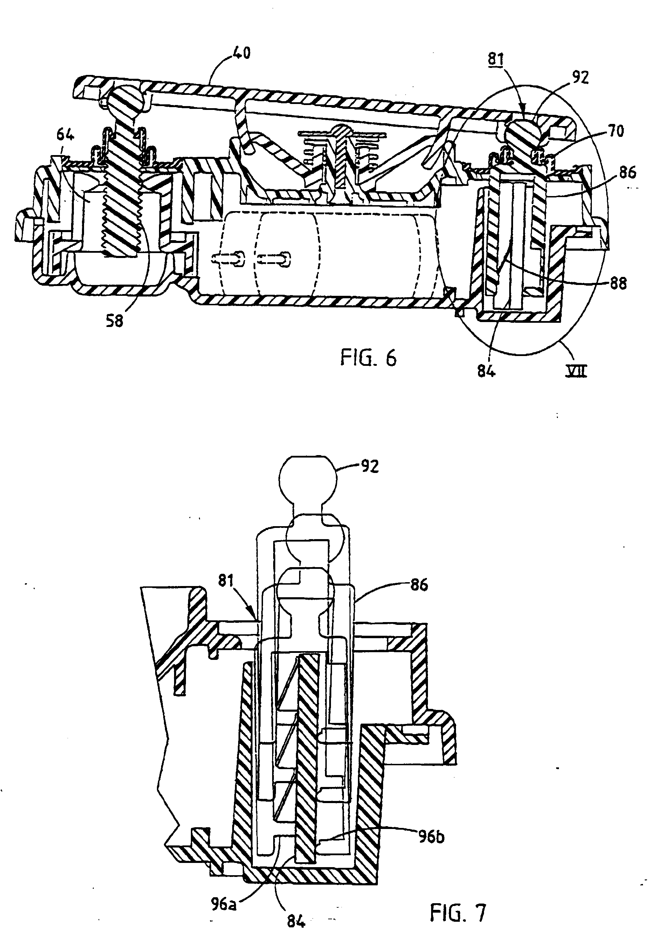

Fig. 6 is a sectional view taken along the lines VI-VI in Fig. 3;
Fig. 7 is an enlarged view of the portion designated VII-VII in Fig. 6 showing movement of the linear actuator in response to movement of the reflective element of the mirror system about an associated degree of freedom;
Fig. 8 is an elevational view of a circuit board useful with the invention;
Fig. 9 is a view of the reverse side of the circuit board shown in Fig. 8;
Fig. 10 is a side elevation of a linear transducer body according to the invention;
Fig. 11 is a rear elevation of the linear transducer body in Fig. 10;
Fig. 12 is a sectional view taken along the lines XII-XII in Fig. 11;

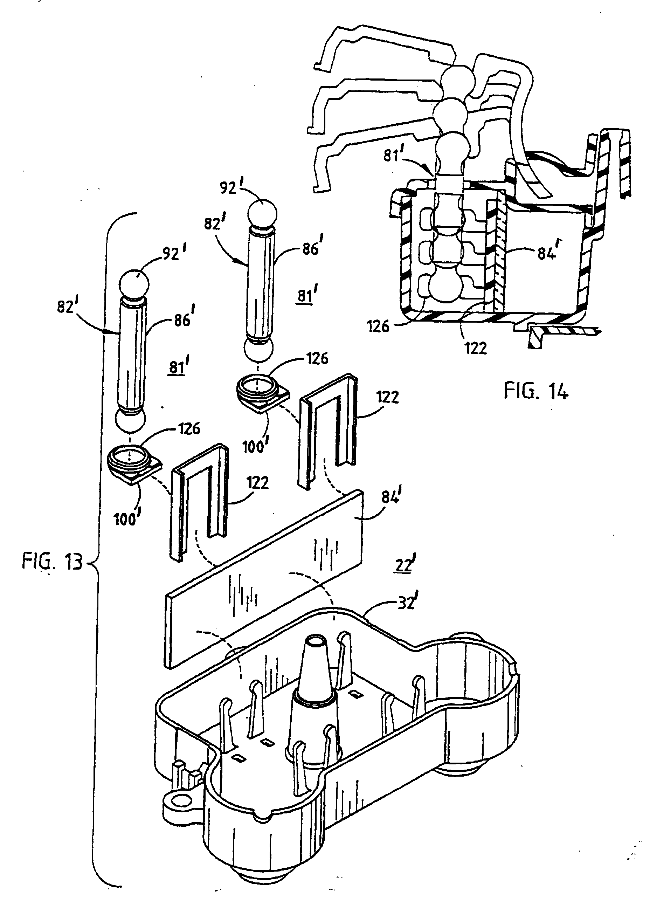

Fig. 13 is an exploded perspective view of an alternative embodiment of a rearview mirror system memory actuator according to the invention;
Fig. 14 is an elevational view of the memory actuator in Fig. 13 showing movement of the linear transducer thereof;
Fig. 15 is a bottom plan view of an actuator illustrating features of the case which are engageable with a wiring harness according to the invention;
Fig. 16 is a side elevation viewed from the left in Fig. 4;
Fig. 17 is the same view as Fig. 15 with a wiring harness and connector attached to the actuator case;
Fig. 18 is a sectional view taken along the lines XVIII-XVIII in Fig. 17;
Fig. 19 is a perspective view of a wiring harness according to the invention;
Fig. 20 is an end elevation taken along the lines XX-XX in Fig. 19;
Fig. 21 is a sectional view taken along the lines XXI-XXI in Fig. 19;
Fig. 22 is an end elevation taken along the lines XXII-XXII in Fig. 19;
Fig. 23 is the same view as Fig. 22 illustrating the portions of the connector in their unassembled position for receiving electrical terminals therein; and
Fig. 24 is a view taken along the lines XXIV-XXIV in Fig. 23.

### DESCRIPTION OF THE PREFERRED EMBODIMENT

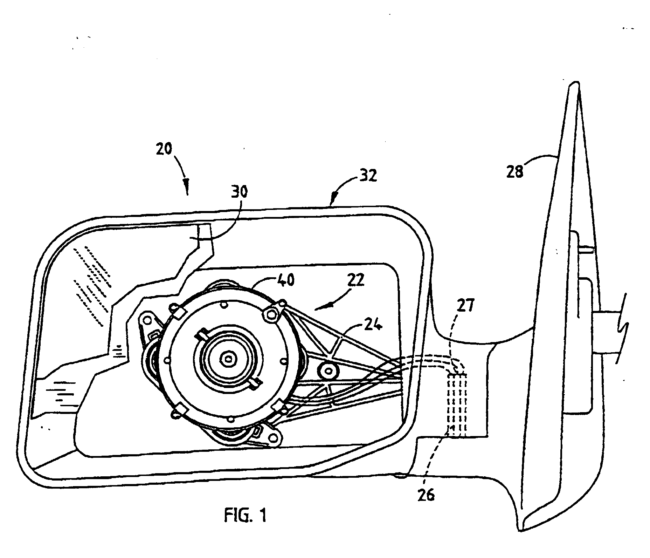

Referring now specifically to the drawings, and the illustrative embodiments depicted therein, a vehicular exterior mirror assembly 20 includes an actuator 22, which is mounted by a bracket 24 through a pivot post 26 to a portion 28 of a vehicle (Fig. 1). A mirror reflective element 30 is supported by actuator 22 in a manner tat provides adjustability to the plane of the mirror element about two axes which are generally aligned with earth's vertical and horizontal axes (not shown). Mirror element 30 may be an electro-optic mirror element capable of a partial reflectance level, such as an electrochromic mirror element, or may be a non-electro-optic mirror element, such as a chrome mirror or the like. Pivot post 26 provides a breakaway feature of mirror assembly 20 such that engagement with a fixed or moveable object will tend to result in folding of the mirror forwardly and rearwardly rather than destruction of the mirror. However, pivot post 26 could also provide a foldaway feature to mirror assembly 20 such that the mirror assembly can be folded close to the vehicle body by a motor (not shown) in response to actuation by an actuator as is known in the art. A housing 32 generally surrounds actuator 22 and bracket 24 and is also attached to pivot post 26 or to bracket 24. Pivot post 26 is hollow including a through-opening 27 through its pivot axis.

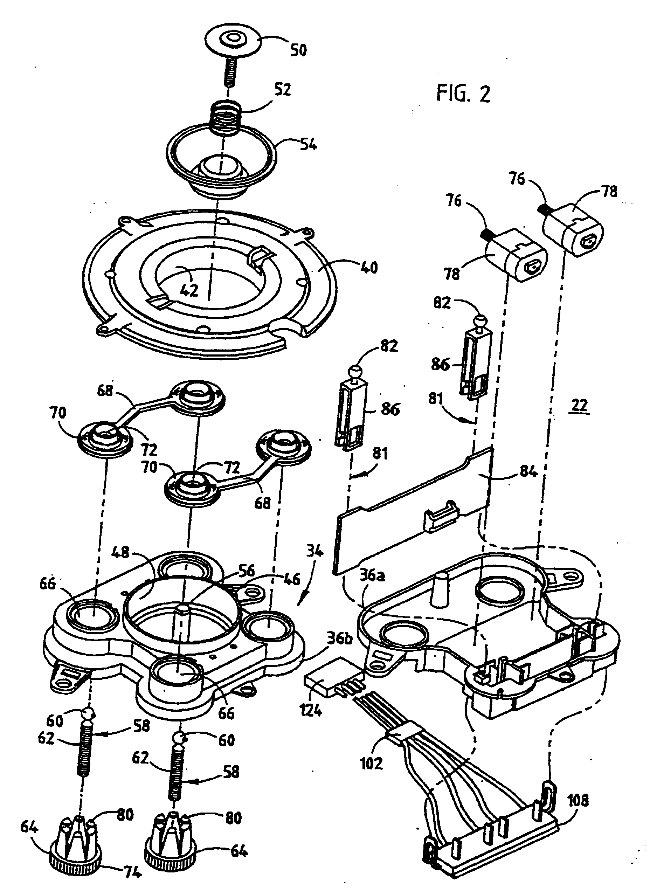

Actuator 22 includes a case 34 made up of complimentary case portions 36a and 36b (Fig. 2). A mirror mounting flange 40 is pivotally positionable with respect to case 34 in a manner which is described in copending application Serial No. 09/047,846 filed March 25, 1998, by Robert E. Schnell for a PIVOT SUPPORT FOR ADJUSTABLE REARVIEW MIRROR, the disclosure of which is hereby incorporated herein by reference. Suffice it to say, mounting flange 40 includes an outer conical surface (not shown) on a portion 42 which is in slidable contact with an edge 46 defined by a generally cylindrical wall 48 of case portion 36b. Mirror mounting flange 40 is biased into moveable engagement with case 34 by a fastener 50 and spring biasing member 52 which biases a retention cup 54 in the direction of case 34 by engagement with a post 56 extending from case portion 36b.

Mirror mounting flange 40 is rotated independently about two generally orthogonal axes, or degrees of freedom, by a pair of screw jacks 58. Each screw jack has a ball 60 which is received within a socket (not shown) of mirror mounting flange 40 and a threaded shaft 62 which threadably engages an internal thread 80 of a rotatable nut member 64. An opening 66 through which screw jack 58 extends is sealed by a gasket member 68 having a seal 70 overlying opening 66. Each seal 70, in turn, has an opening 72 through which ball 60 can protrude as disolosed in United States Patent No. 5,986,364, entitled HOUSING WITH INTEGRAL WEATHER SEAL WITH NOISE DAMPENERS FOR A REARVIEW MIRROR ACTUATOR ASSEMBLY, the disclosure of which is hereby incorporated herein by reference. Each nut member 64 includes an external ring 74 having gear teeth formed thereon which is rotatably engaged with a worm gear 76 of an electric DC motor 78. In this manner, rotation of worm gear 76 by motor 78 rotates nut member 64 which extends or retracts screw jack 58 by threadable engagement between threaded shaft 62 and internal threads 80 on nut member 64. Although the above is a preferred mechanism for pivotably positioning the mirror mounting flange with respect to the case, other mechanisms known in the art may also be used.

An opening 66 through which screw jack 58 extends is sealed by a gasket member 68 having a seal 70 overlying opening 66. Each seal 70, in turn, has an opening 72 through which ball 60 can protrude. Each nut member 64 includes an external ring 74 having gear teeth formed thereon which is rotatably engaged with a worm gear 76 of an electric DC motor 78. In this manner, rotation of worm gear 76 by motor 78 rotates nut member 64 which extends or retracts screw jack 58 by threadable engagement between threaded shaft 62 and internal threads 80 on nut member 64. Although the above is a preferred mechanism for pivotably positioning the minor mounting flange with respect to the case, other mechanisms known in the art may also be used.

Mirror assembly 20 may be a memory mirror system which is capable of being repositioned to one or more positions stored in a memory device (not shown) by a controller (not shown). An example of a control system for a memory mirror is disclosed in commonly assigned United States Patent 5,796,176 entitled MEMORY MIRROR SYSTEM FOR VEHICLES, the disclosure of which is hereby incorporated herein by reference. Memory mirror system 20 includes a position monitoring device, such as linear position transducer 81, coupled to reflective element 30 that produces a signal indicative of the position of reflective element 30 with respect to an axis of movement or degree of freedom. The signal produced by the transducer is used in a closed-loop control to allow a controller (not shown) to reliably position reflective element 30 to one or more particular positions stored in the memory of the controller. In this manner, for example, positions of the mirror for different drivers can be stored in memory and retrieved in order to set the mirrors for that driver. In particular, as each motor 78 positions mirror-mounting flange 40 about its associated axis, or degree of freedom, the position of the minor-mounting flange and, hence, the reflective element, with respect to that axis or degree of freedom, is monitored by the corresponding linear position transducer 81.

Each linear position transducer 81 includes a coupler 82 which slidably engages a circuit board 84 such that circuit board 84 guides coupler 82 in at least one direction. In the illustrated embodiment, that direction is normal to the plane of circuit board 84. As previously set forth, there is one linear position transducer associated with each motor 78. In this manner, as a motor 78 pivots mounting flange 40 about an axis, or degree of freedom, a linear position transducer 81 monitors the movement of the mounting flange and, hence, the reflective element about that axis or degree of freedom. Preferably, the coupler 82 associated with the two linear position transducers slidably engage a common circuit board 84. This further enhances the simplicity of the design and ease of assembly of the actuator 22.

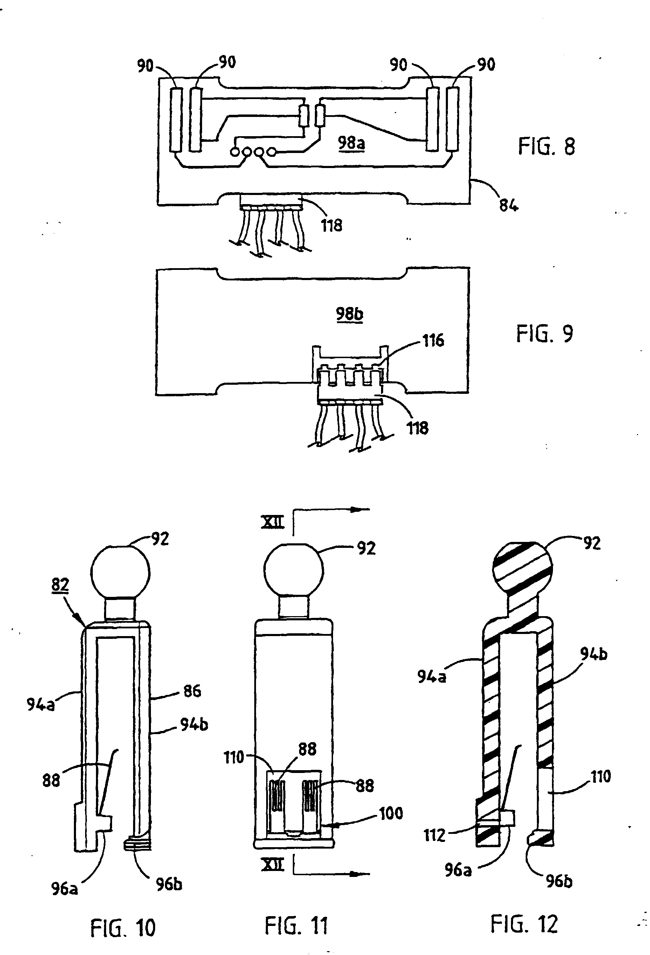

Coupler 82 has a body 86 and a brush assembly defining a pair of metal contacts 88 electrically interconnected with each other. Each contact 88 is biased against and makes ohmic contact with a respective resistive trace 90 of circuit board 84 (Figs. 8-12). Body 86 includes a head 92 which pivots within a socket (not shown) of mirror-mounting flange 40 in order to accommodate the angular deviation between the mounting flange and body 86 throughout the range of movement of both as the mounting flange moves about the degree of freedom monitored by that linear position transducer. Body 86 additionally includes a pair of arms 94a and 94b, each of which includes a projection 96a, 96b generally at a terminal portion of the respective arm. Projections 96a 96b glide along the front and back surfaces 98a, 98b of circuit board 84 and facilitate a pivoting movement of body 86 in a direction normal to surfaces 98a, 98b. Projections 96a, 96b further provide spacing of the brush assembly 100 which defines contacts 88 from surface 98a of circuit board 84. In this manner, projections 96a, 96b ensure that a relatively consistent contact pressure is made between contacts 88 and resistive traces 90.

A through-opening 110 is defined in arm 96b generally opposite the location of brush assembly 100. Opening 110 facilitates the joining of brush assembly 100 to leg 94a by providing access to the inner surface of leg 94a to allow brush assembly 100 to be assembled from a single direction to arm 94a. This feature facilitates the use of automatic assembly of the brush to the coupler 82. Brush assembly 100 can be attached to arm 94a using known techniques, such as heat-staking, adhesive bonding, or the like. In the illustrative embodiment, a recess 112 is provided in arm 94a in order to receive, in an interference-fit relationship, a portion of brush assembly 100. The skilled artisan would appreciate that other known techniques could be utilized to fasten brush assembly 100 to arm 94a, such as heat staking, insert molding, or the like.

As previously set forth, circuit board 84 guides coupler 82 in a direction generally normal to the plane of surfaces 98a, 98b of the circuit board. A plurality of restraints 114 are formed in housing 36a on opposite sides of arms 94a and 94b and configured to guide coupler 82 in a direction generally parallel to the plane defined by surfaces 98a, 98b of circuit board 84. In this manner, coupler 82 is guided both laterally and longitudinally as it reciprocates with respect to circuit board 84. It should be understood that restraints 114 are configured in order to provide sufficient clearance to accommodate limited pivotal motion of the coupler 82 with respect to the restraints 114. This is because the slide pivots in response to the arcuate motion of mirror-mounting flange 40. The loose frictional coupling between projections 96a, 96b and circuit board 84 provides pivotal motion in the direction of restraints 114 as well as in the direction normal surfaces 98a and 98b of circuit board 84.

Circuit board 84 includes two pairs of resistive traces 90 in order to generate a signal for both linear position transducers 81. As is known in the art, each pair of resistive traces 90 forms a voltage divider with one trace of each pair providing a voltage gradient and the other trace receiving a variable voltage coupled from the one trace as a result of movement of brush assembly 100 along the respective pair of traces. A connector 116 supplies voltage to operate the linear position transducers and to receive the output signal therefrom and to supply the output signal to a controller (not shown). Connector 116 may be coupled with a connector 118 of a wiring harness which passes through opening 27 of pivot post 26 in order to provide electric connectivity with circuit board 84 in the manner previously described. In order to facilitate disconnectivity, an opening 120 is defined in housing portion 36b in alignment with connector 116 whereby inner connection with both linear position transducers 81 may be provided with a single external connector 118.

In an alternative embodiment, a vehicle exterior mirror assembly includes an actuator 22' having a case or housing 32' and a circuit board 84' mounted within housing 32'. A pair of linear position transducers 81' each include a coupler 82' and a glide member 126 which supports a brush assembly 100'. Glide member 126 is guided by circuit board 84' by a respective track 122 juxtaposed with circuit board 84'. Preferably, track 122 is bonded to circuit board 84', but could be held in juxtaposition therewith by common mounting to a common substrate or the like. As the reflective element (not shown) moves about mutually exclusive degrees of freedom, each coupler 82' moves the respective glide member 126 along track 122. As with the previous embodiment, circuit board 84' includes two pairs of resistive tracks in order to develop a signal to represent the position of each brush assembly 100' with respect to the circuit board. Each coupler 82' includes a body 86' having a first ball 92' for engaging the reflective element and a second spherical ball member 124 which pivotally engages glide member 126. In this manner, the rocking movement of body 86' is accommodated by the rotational coupling between head 124 and glide member 126.

Other embodiments will suggest themselves to the skilled artisan. For example, although both linear transducers preferably reciprocate with respect to a single circuit board, the invention could also be implemented with separate circuit boards for each linear position transducer. Furthermore, although the invention is illustrated for use with resistive traces on the circuit board which are engaged by a brush assembly, other transducing phenomena may be utilized, such as Hall-effect sensing, capacitive sensing, inductive sensing, and the like. Although the glide member is illustrated as being supported by the circuit board surface, it could also be supported by surfaces affixed on or adjacent to the surface of the circuit board.

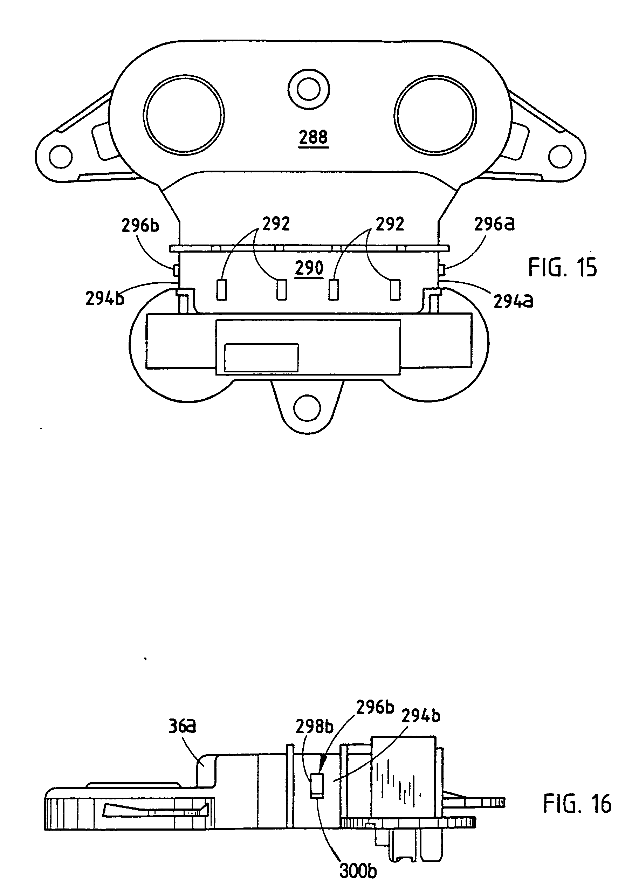

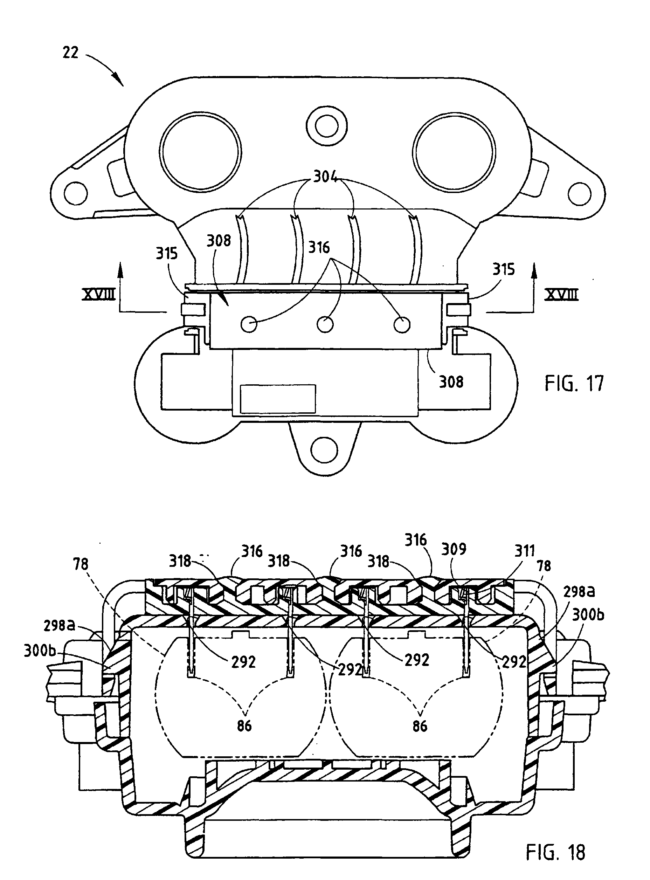

Motors 78 each include a pair of female terminals 86 which supply electrical energy to operate motors 78 (Figs. 4, 16, 17 and 18). In the illustrated embodiment, terminals 86 are recessed female terminals but could, alternatively, be male terminals protruding from the housing of motors 78. Housing portion 36a has an outer surface 288 which defines a connector-engaging portion 290. A series of openings 292 are formed in connector-engaging portion 290. Openings 292 are generally aligned with terminals 86 such that a male terminal inserted in an opening 292 will engage a corresponding female terminal 86. Connector-engaging portion 290 has a pair of side portions 294a and 294b, each of which extends generally at right angles to connector-engaging portion 90 of outer surface 288. A pair of retention members 296a, 296b protrude from respective side portions 294a, 294b. Each retention member includes a camming surface 298a, 298b and a retention surface 300a, 300b.

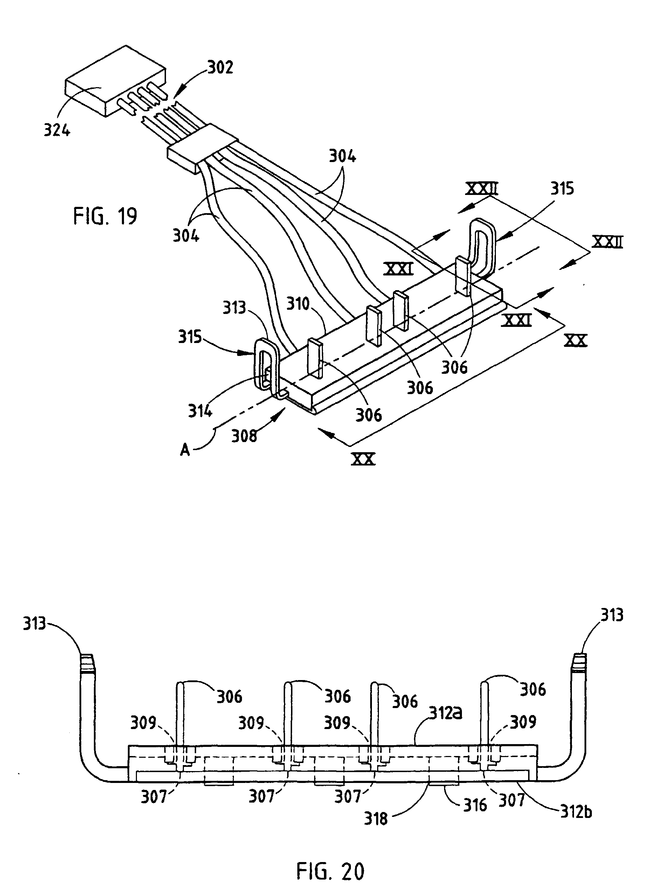

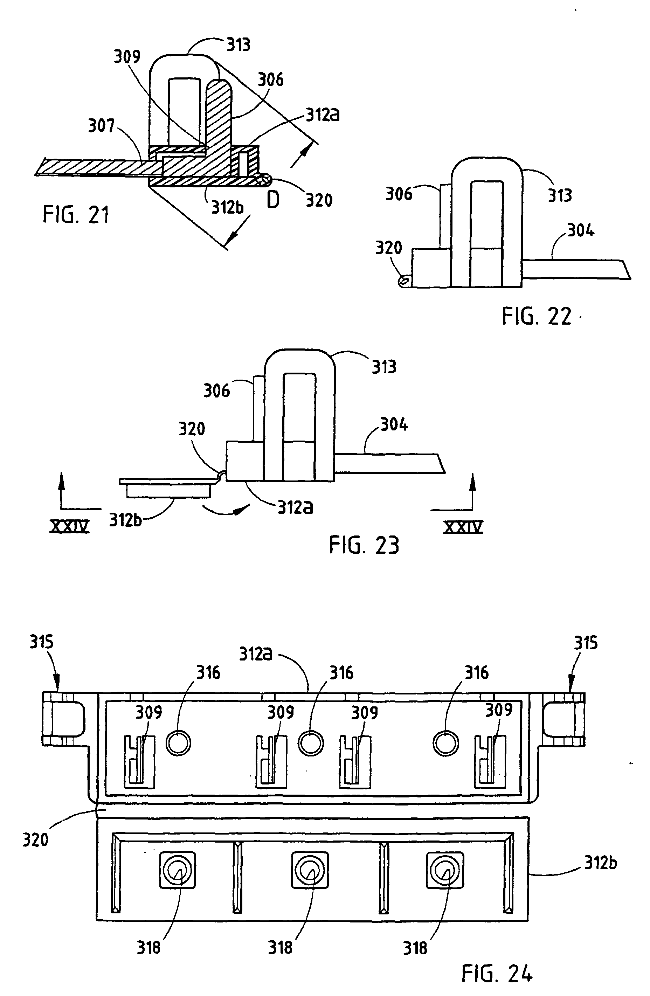

Mirror assembly 20 further includes a wire harness 302 which is made up of a plurality of wires 304, each of which is electrically and mechanically joined with an electrical terminal 306 of a connector assembly 308. Connector assembly 308 includes a body 310 made up of two facing body portions 312a, 312b. Body portion 312a includes a plurality of recesses 311 which are configured to conform to a base portion 307 of terminal 306. Each recess is juxtaposed with an opening 309 that penetrates body portion 312a such that the terminal 306 may extend from the connector body. Each terminal base portion 307 is inserted into one of the recesses 309 and retained therein when the body portion 312b is joined with body portion 312a. This is accomplished by joining the body portions by known relationships, such as cold staking, heat staking, snap welding, sonic welding, adhesive bonding, or the like. To assist in the bonding, one or more posts 316 extend from either body portion 312a or 312b and are tightly received in a corresponding opening 318 in the opposite body portion 312a, 312b. Post 318 provides an additional surface area for use in joining the connector portions together and may be deformed during the joining process to further retain the body portions together. As can be seen by reference to Fig. 20, because each contact base portion 307 is captured between body portion 312a and 312b, the terminal is resistant to being pulled out of its mooring in the connector. Advantageously, body portions 312a and 312b may be formed together in a single piece by a living hinge including a hinge portion 320 such that, prior to assembly, the body portions 312a and 312b are generally coplanar, as illustrated in Figs. 23 and 24, and, after assembly, the body portions are in facing relationship, as illustrated in Figs. 19-22. In the illustrated embodiment, body 310 is made from polyester plastic but other known plastics may be used.

A pair of retention members 315, shown as ears, extend from body portion 308 and engage with respective retention members 296a and 296b on case portion 36a. Each retention member 315 has an outer frame 313 surrounding a central opening 314 therein. The solid frame 313 of retention member 315 slides over respective camming surfaces 298a, 298b as connector assembly 308 is joined with casing 36. Because retention members 315 are flexible, they expand outward under the action of camming surfaces 298a, 298b and may be captured by respective retention surface 300a, 300b thereby mechanically retaining the connector in position against casing 36. Retention members 315 may be made resilient so that they snap into alignment with respective retention surfaces 300a, 300b. Alternatively, they could be flexible yet require movement into position with retention surfaces 300a, 300b either by finger motion or by using a tool. However, it is seen that the engagement between retention members 315 and retention members 296a, 296b provide complimentary retention members which positively retain a connector on the actuator case such that the connector is not prone to being pulled off of the case merely by pulling on wires 204. Instead, a positive disengagement motion on retention members 215 is required in order to remove the connector from the case. The retention members could be configured such that a tool is required to dislodge the ears from the retention member, or the case could be sealed at the retention members. Alternatively, they could be configured that finger motion is all that is necessary to dislodge the retention members. Either way, the engagement between the connector assembly and the case is secure. It should be apparent that retention members 215 could be positioned on case 34 and retention members 296a, 296b on connector body 308.

Connector body 308 has a maximum cross-sectional dimension D shown in Fig. 21 that is perpendicular to its long axis A seen in Fig. 19. In this manner, connector assembly 308 can be fit through a circular opening having a diameter at least somewhat greater than the dimension D. Because of the unique configuration of connector 308, dimension D can be made smaller than cross-section dimensions of central opening 27 through pivot post 26 so that connector assembly 308 can be fit through central opening 27 of pivot post 26. This allows wiring harness 302 to be fully assembled to connector 324 on the opposite ends of wires 104 prior to assembly of the exterior mirror assembly. This advantageously allows the wiring harness to be inserted in position extending from vehicle portion 28 to actuator 22 through pivot post 26 after both ends of wiring harness 302 are terminated with connectors. This is advantageous during assembly of the vehicle exterior mirror assembly because wiring harness 302 may be assembled to the mirror assembly after it has been assembled merely by the insertion of connector assembly 308 through the opening in pivot post 26 without the need for subsequent termination of individual wires 304.

Connector assembly 308 has, preferably, four terminals for individually connecting to both motors 78. Two of the terminals can, if desired, be fed by a common ground or power lead. Alternatively, connector 308 could have three terminals for connecting with both motors 78, one of the terminals being a common ground or a common power lead to both motors. Advantageously, this simultaneous connection to both motors 78 reduces the number of connections that must be made during assembly of the vehicle and reduces the ability to misconnect the wiring harness to the actuator. Advantageously, connector assembly 308 is retained to case 36 by retention members that do not penetrate the case. Because every opening into the case is a potential source of moisture leakage, this feature enhances the moisture resistance of the actuator case. Because terminals 306 connect directly with terminals on the motor, the need for an internal wiring harness in case 36 is eliminated.

Connector assembly 308 securely retains terminals 306 in the connector body by retaining a base 307 of each terminal 306 between opposing housing portions which are fixedly joined together. This greatly enhances the securing of each terminal within the connector. Furthermore, because the terminals are inserted through openings in a connector portion, the connector is adapted to automated assembly techniques.

Changes and modifications in the specifically described embodiments can be carried out without departing from the principles of the invention which is intended to be limited only by the scope of the appended claims, as interpreted according to the principles of patent law including the doctrine of equivalents.

## Claims

1. A vehicular rearview mirror system actuator for adjustably positioning a reflective element, comprising:
a case;
at least one positioning member extending from said case to move the reflective element about at least one degree of freedom;
at least one motor driving said positioning member;
a linear position transducer having a body for coupling to the reflective element; and
a circuit board positioned in said case, said body of said linear position transducer being guided at said circuit board in at least one direction and moving along said circuit board between a plurality of positions in response to the movement of the reflective element about the at least one degree of freedom, said circuit board being configured to generate a signal as a function of the position of the body of the linear position transducer along said circuit board.

2. The mirror actuator claimed in claim 1 wherein said body includes a ball member for coupling to the reflective element.

3. The mirror actuator claimed in claim 1 or 2 wherein said circuit board includes first and second spaced-apart resistive strips, said linear position transducer having a pair of contact portions for engaging said resistive strips when said linear position transducer moves along said circuit board.

4. The mirror actuator claimed in claim 3 wherein said body includes a pair of arms, wherein said arms straddle said circuit board and move said pair of contact portions along said first and second resistive strips, respectively, in response to the movement of the reflective element.

5. The mirror actuator claimed in claim 4 wherein at least one of said arms includes a projecting member, said projecting member engaging said circuit board whereby said body is pivotal on said circuit board about said projecting member(s).

6. The mirror actuator claimed in claim 4 or 5 wherein said pair of contact portions are supported on a first arm of said pair of arms and are biased against said first and second resistive strips.

7. The mirror actuator claimed in claim 2 wherein said body has a glide member opposite said ball member, said glide member being guided by said circuit board.

8. The mirror actuator claimed in claim 7 wherein said glide member is guided by a track member juxtaposed with said circuit board.

9. The mirror actuator claimed in any one of claims 3 to 6 wherein said first resistive strip comprises a resistive element of a voltage divider circuit, said second resistive strip for producing said signal.

10. A vehicular exterior mirror actuator assembly for adjustably positioning a reflective element, comprising:
an actuator having a case and at least two electric motors supported by said case and adapted to be connected with a reflective element to provide adjustment to the reflective element with respect to at least two axes; and
a wire harness having a connector and a plurality of wires terminated at said connector, said connector including at least three electrical connector terminals electrically interconnected with said wires and a body configured to engage said actuator case.

11. The mirror actuator assembly claimed in claim 10 wherein said connector body is made up of two body portions joined in facing relationship, and wherein said connector terminals include base portions which are captured between said two body portions.

12. The mirror actuator assembly claimed in claim 10 or 11 further including a member having an internal passage and wherein said electrical connector has a maximum cross-section dimension sufficiently small to allow the connector to pass through said internal passage.

13. The mirror actuator assembly claimed in claim 12 wherein said internal passage is in a mirror assembly pivot post.

14. The mirror actuator assembly claimed in any one of claims 10 to 13 including complementary retention members on said connector and said actuator case that engage to retain said connector with said actuator case.

15. The mirror actuator assembly claimed in any one of claims 10 to 14 wherein said connector is joined with said actuator case and said connector terminals make direct contact with corresponding receiving terminals of said at least two electric motors.

16. The mirror actuator assembly in any one of claims 10 to 15 wherein said mirror assembly is a memory minor assembly and further includes a reflective element position transducer in said case for each said axis.
